# EUROPEAN PATENT APPLICATION

(11) **EP 1 650 720 A2**
(43) Date of publication of application: **26.04.2006**
(21) Application number: 05256514.0
(22) Date of filing: 21.10.2005
(51) Int. Cl.: G07F 17/32

(54) **Gaming machine**

(30) Priority: 25.10.2004 JP 2004309750
(71) Applicant: Aruze Corporation, Tokyo 135-0063 (JP)
(72) Inventor: Okada, Kazo, Koto-ku Tokyo 135-0063 (JP)
(74) Representative: Nicholls, Michael John

(57) **Abstract**

In the slot machine 1, if the WILD symbol 69 is stopped and displayed on the pay line L and any of the winning symbol combinations is won, the auxiliary symbol 90 described as "X 2" is newly displayed in the symbol transmissive area 8 of the lower liquid crystal display 4, thereby the WILD symbol 69 transmitted and displayed through the symbol transmissive area 8 and the auxiliary symbol 90 are superimposed and displayed with intention and the WILD symbol 69 is changed to the DOUBLE symbol 91.

## Description

The present invention relates to a gaming machine in which a predetermined benefit is given based on a symbol combination stopped and displayed. In particular, the present invention relates to a gaming machine such as a slot machine in which expectation of a player can be raised by changing a specific symbol constructing a winning symbol combination to a final symbol while combining the specific symbol with an auxiliary symbol independently displayed in a transmissive are.

Conventionally, the gaming machine such as the slot machine is constructed so that a game is started by inserting game media such as medals into the game machine and symbol columns are variably displayed in a predetermined area of the gaming machine, and are stopped and displayed after a predetermined time elapses. And in a case that the symbol combination stopped becomes a predetermined winning symbol combination, a benefit is given to the player by paying out game media.

Here, although different symbols are finally stopped and displayed in every time of variable and stop display of the symbol columns conducted in the slot machine, such variable and stop display is done by basically repeating the same process. Therefore, the game is apt to become monotonous for the player who plays games for a long time, as a result, there is fear that the player loses interest.

Thus, for example, in Unexamined Japanese Publication No. 2004-173950, it is disclosed a gaming machine that a specific information symbol is determined based on a random number if a bonus symbol is displayed in a bonus symbol display area and a bonus symbol is changed to the specific information symbol by using animation thereof, thereby expectation of the player can be raised.

And in unexamined Japanese Patent Application No. 2002-320713, it is disclosed a gaming machine in which the symbols determined by a first lottery are stopped in each of symbol display areas, and if a bonus symbol is displayed in the symbol display area ruled as a bonus symbol display area, a second lottery to determine a benefit corresponding to the bonus symbol is conducted. Thereafter, the bonus symbol is changed to a beneficial information symbol which represents contents of the benefit determined by a result in the second lottery, thereby expectation of the player can be raised.

However, in the slot machines disclosed in both two Japanese references, although the symbol (wild symbol or bonus symbol) once stopped and displayed is further changed and the game becomes slightly variegated, it is merely an operation existing on extension of symbol variable display to further change the symbol after stopped in video reels displaying the symbols on the liquid crystal display and the like. That is to say, for the player, it is predictable to some extent that the symbol once stopped and displayed is further changed, therefore the specific effect to raise expectation of the player by further changing the symbol cannot be sufficiently realized.

In order to dissolve the above problems, the present invention has been done and has an object to provide a gaming machine in which a game can be sufficiently variegated by further changing a specific symbol once stopped and displayed to a final symbol in an unpredictable mode for the player, thereby expectation of the player playing the game can be raised.

In order to accomplish the above object, according to one aspect of the present invention, it is provided a gaming machine comprising:
a first display device having a plurality of display lines on each of which plural symbols are variably displayed;
a stop control device for controlling the first display device so as to stop the symbols on each of the display lines in the first display device;
a payout device for paying out a first payout based on a first winning symbol combination in a case that the symbols stopped and displayed on each of the display lines in the first display device by the stop control device becomes the first winning symbol combination;
a second display device arranged in front of the first display device, the second display device having transmissive areas each of which is arranged so as to correspond to each of the display lines and through which the symbols stopped and displayed on each of the display lines are transmitted and displayed;
a symbol determination device for determining whether or not the first winning symbol combination includes a specific symbol in a case that the symbols stopped and displayed on each of the display lines becomes the first winning symbol combination;
a symbol change device for changing the specific symbol to a final symbol constructing a second winning symbol combination with a second payout in a case that it is determined by the symbol determination device that the specific symbol is included in the first winning symbol combination; and
an auxiliary symbol display device for controlling the second display device to display an auxiliary symbol constructing the final symbol in cooperation with the specific symbol in the transmissive area corresponding to the display line on which the specific symbol is stopped and displayed.

According to the gaming machine, in a case that the symbols stopped and displayed on each of the display lines in the first display device becomes the first winning symbol combination and the specific symbol is included in the first winning symbol combination, the auxiliary symbol is newly displayed in the transmissive area of the second display device, the transmissive area corresponding to the display line on which the specific symbol is stopped and displayed. Thereby, the auxiliary symbol constructs the final symbol in cooperation with the specific symbol, the final symbol constructing the second symbol combination. Accordingly, by combining one symbol on the display line of the first display device displayed through the transmissive area of the second display device and the other symbol newly displayed on the transmissive area, it can be realized variegated effect to change one symbol to the other symbol which is finally displayed. As a result, on the basis of the effect unpredictable for the player, it is improved expectation of the player as if the player can obtain higher payout, thus the player does not get tired.

Further, since the specific symbol and the auxiliary symbol are displayed in a superimposed state by two display devices which are physically distant, effect with cubic feeling, which cannot be realized by one display device, can be done.

Further, according to another aspect of the present invention, it is provided a gaming machine comprising:
a variable display device having a plurality of display lines on each of which plural symbols are variably displayed;
a stop control device for controlling the variable display device so as to stop the symbols on each of the display lines in the variable display device;
a payout device for paying out a first payout based on a first winning symbol combination in a case that the symbols stopped and displayed on each of the display lines in the variable display device by the stop control device becomes the first winning symbol combination;
a symbol determination device for determining whether or not the first winning symbol combination includes a specific symbol in a case that the symbols stopped and displayed on each of the display lines becomes the first winning symbol combination;
a symbol change device for changing the specific symbol to a final symbol constructing a second winning symbol combination with a second payout in a case that it is determined by the symbol determination device that the specific symbol is included in the first winning symbol combination; and
an auxiliary symbol display device for displaying an auxiliary symbol constructing the final symbol in cooperation with the specific symbol stopped and displayed on the display line.

According to the gaming machine, in a case that the symbols stopped and displayed on each of the display lines in the variable display device becomes the first winning symbol combination and the specific symbol is included in the first winning symbol combination, it is newly displayed the auxiliary symbol constructing the final symbol in cooperation with the specific symbol, the final symbol constructing the second symbol combination. Accordingly, since the final symbol is displayed by combining the specific symbol and the auxiliary symbol, it can be realized variegated effect and it is improved expectation of the player as if the player can obtain higher payout. As a result, on the basis of the effect unpredictable for the player, game characteristic can be improved and thus the player does not get tired.

The above and further objects and novel features of the invention will more fully appear from the following detailed description when the same is read in connection with the accompanying drawings. It is to be expressly understood, however, that the drawings are for purpose of illustration only and not intended as a definition of the limits of the invention.

The invention will be further described by way of example with reference to the accompanying drawings, in which:
Fig. 1 is a perspective view of a slot machine,
Fig. 2 is a front view showing an inner construction within a cabinet of the slot machine according to the embodiment,
Fig. 3 is a perspective view showing reels and a lower liquid crystal display of the slot machine according the embodiment,
Fig. 4 is a sectional view showing the lower liquid crystal display and the reels which are sectioned along a A-A line of Fig. 3,
Fig. 5 is an exploded perspective view showing the lower liquid crystal display of the slot machine according to the embodiment,
Fig. 6 is a schematic view showing symbol columns each of which is formed on an outer periphery of the reel of the slot machine according to the embodiment,
Fig. 7 is a block diagram schematically showing a control system in the slot machine,
Fig. 8 is a block diagram schematically showing a liquid crystal drive circuit of an upper liquid crystal display and the lower liquid crystal display,
Fig. 9 is an explanatory view showing a lottery table of the slot machine according to the embodiment,
Fig. 10 is an explanatory view showing a payout table showing winning symbol combinations and payouts in the slot machine according to the embodiment,
Fig. 11 is a schematic view showing a display mode according to which a DOUBLE symbol is displayed by using the reels and the lower liquid crystal display,
Fig. 12 is schematic views showing the lower liquid crystal display, in which Fig. 12 (A) is a schematic view of the lower liquid crystal display on which a WILD symbol is stopped and displayed and Fig. 12 (B) is a schematic view of the lower liquid crystal display on which the DOUBLE symbol is stopped and displayed,
Fig. 13 is a flowchart of a main process program,
Fig. 14 is a flowchart of a start acceptance process program,
Fig. 15 is a flowchart of a lottery process program,
Fig. 16 is a flowchart of a base game process program,
Fig. 17 is a flowchart of a base game process program conducted in the slot machine according to another embodiment, and
Fig. 18 is an explanatory view showing a symbol change lottery table used in the slot machine according to another embodiment.

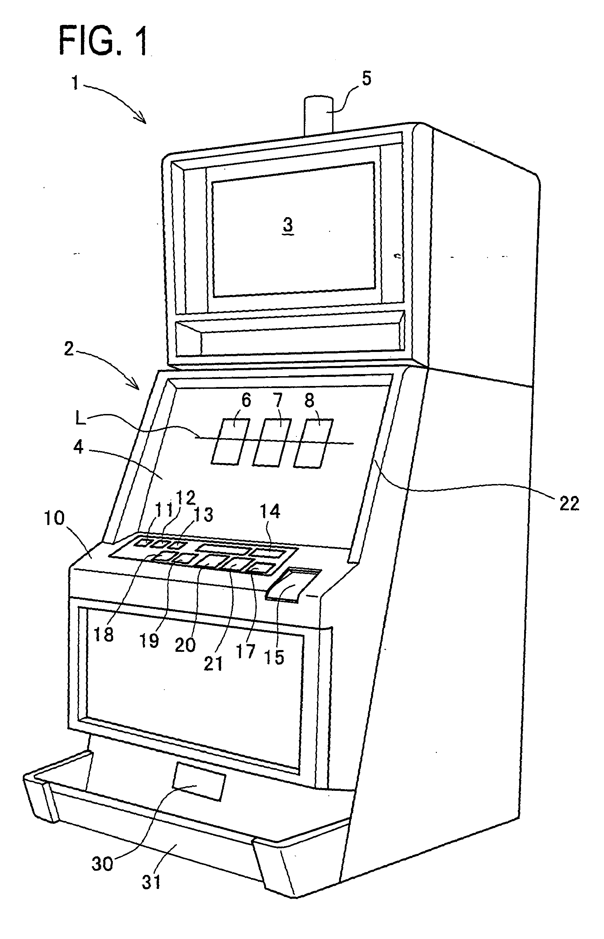

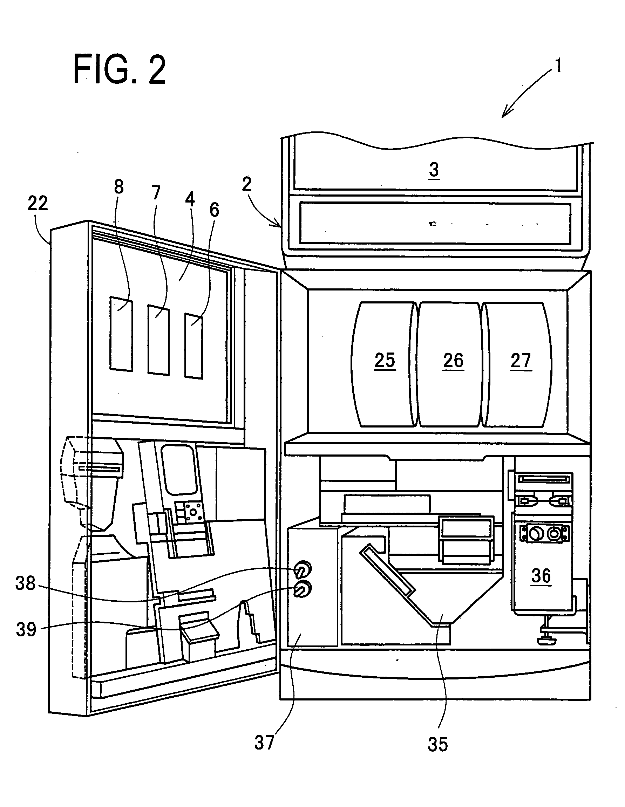

Hereinafter, as the gaming machine according to the present invention, the embodiment embodying the present invention in the slot machine will be described with reference to the drawings. First, an outline construction of the slot machine according to the embodiment will be described with reference to Figs. 1 and 2. Fig. 1 is a perspective view of the slot machine, and Fig. 2 is a front view showing an inner construction within a cabinet of the slot machine according to the embodiment.

In Fig. 1, the slot machine 1 has a cabinet 2 constructing a whole of the slot machine 1. At a front upper part of the cabinet 2 an upper liquid crystal display 3 is arranged, and at a front central part of the cabinet 2 a lower liquid crystal display 4 is arranged. Here, the upper liquid crystal display 3 is constructed from a liquid crystal display device which is generally used, and the lower liquid crystal display 4 is constructed from, so-called, a transparent liquid crystal display device which is a transmissive type. On the upper liquid crystal display 3, game operation method, kinds of winning combinations and payout therefor, help information to assist the game operation method and information concerning with the game such as various effects thereof are displayed. And it is arranged on an upper part of the upper liquid crystal display 3 a lamp 5 which is turned on when an error occurs or a player calls a shopkeeper. Further, on the lower liquid crystal display 4, as shown in Fig. 1, there are formed three symbol transmissive areas 6, 7 and 8 that are transmissive areas through which the symbols described on each of the reels 25 to 27 arranged at a rear side of the lower liquid crystal display 4 are transmitted and displayed. Various symbols (mentioned later) are variably displayed on each of the symbol transmissive areas 6, 7, 8 while being scrolled to the downward direction from the upward direction. Here, the detailed construction of the lower liquid crystal display 4 will be described hereinafter.

A control panel 10, which is projected frontward, is formed below the lower liquid crystal display 4, and from the most left side on the control panel 5 when seeing from a position opposite to the front plane of the slot machine 1, a change button 11, a cashout button 12, a help button 13 are arranged. And a coin insertion slot 14 and a bill insertion portion 15 are arranged at the right side of help button 13. Further, from the left side at the forward position of the control panel 10, a 1-BET button 18, a REPEAT BET button 19, a 3-BET button 20, a MAX BET button 21 and a start button 17 are positioned.

And at a lower part of the cabinet 2, a coin payout chute 30 is formed and it is provided a coin tray 31 to receive coins (for example, one dollar coins) paid out from the coin payout chute 30 when the cashout button 12 is pressed. Within the coin payout chute 30, a coin detection portion 84 constructed from a sensor and the like is disposed and the coin detection portion 84 detects a number of coins paid out from the coin payout chute 30. And when the cashout button 12 is pressed coins corresponding to the credit owned by the player at present are paid out from the coin payout chute 30 through a hopper 35 mentioned later.

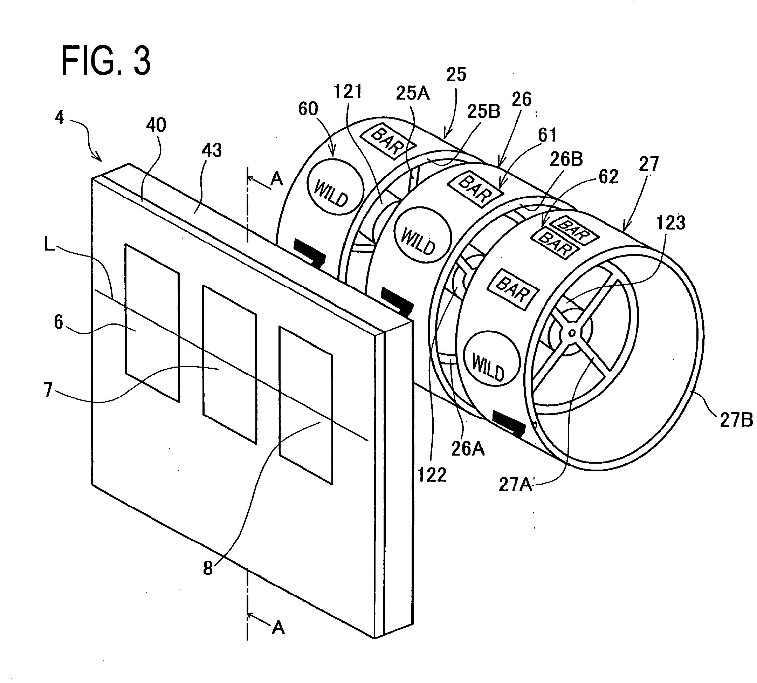

Further, as shown in Fig. 2, at the center part within the cabinet 2 in a state that a device front panel 22 provided at the front plane of the cabinet 2 is opened, reels 25, 26 and 27 are rotatably arranged. On an outer periphery of each of the reels 25, 26, 27, a plurality of symbols are disposed (see Fig. 3) and these symbols can be seen and recognized by the player through each of the symbol transmissive areas 6 to 8. And based on rotation of the reels 25 to 27, the symbols displayed in the symbol transmissive areas 6 to 8 are variably displayed.

Further, at both sides of the hopper 35, there are provided a bill validator 36 to validate the bills inserted through the bill insertion portion 15 and a power box unit 37. In front of the power box unit 37, there are arranged a main switch 38 to supply and shut off electric power necessary to operate the slot machine 1 and a reset switch 39 to initialize a state of the slot machine 1.

The change button 11 is a button to call the shopkeeper when the player changes a bill (for example, 10 dollars bill) into coins, and when the change button 11 is pressed, the lamp 5 is turned on. To the change button 11, a change switch 74 mentioned later is attached, and a switch signal is output to a CPU 71 from the change switch 74 based on press of the change button 11.

The cashout button 12 is a button which is generally pressed when the game is terminated, and when the cashout button 12 is pressed, coins corresponding to the credit obtained in the game are paid out from the coin payout chute 30 to the coin tray 31 through the hopper 35. Here, to the cashout button 12, a cashout switch 75 mentioned later is attached and a switch signal is output to the CPU 71 from the cashout switch 75 based on press of the cashout button 12.

The help button 13 is a button which is pressed when the game operation method cannot be understood, and a help image constructed from various help information is displayed on the upper liquid crystal display 3 right after the help button 13 is pressed. To the help button 13, a help switch 76 mentioned later is attached and a switch signal is output to the CPU 71 from the help switch 76 based on press of the help button 13.

Within the coin insertion slot 14, a coin sensor 82 mentioned later is disposed, and when a coin is inserted into the coin insertion slot 14, a coin detection signal is output to the CPU 71 through the coin sensor 82. And within the bill validator 36, a bill sensor 83 mentioned later is disposed, and when a bill is inserted in the bill insertion portion 15, a bill detection signal is output to the CPU 71 through the bill sensor 83.

As for the 1-BET button 18, every the 1-BET button 18 is pressed one credit is betted, and to the 1-BET button 18, a 1-BET switch 77 is attached and when the 1-BET button 18 is pressed a switch signal is output to the CPU 71 from the 1-BET switch 77 based on press of the 1-BET button 18.

The REPEAT BET button 19 is a button to start games from the present bet number or the previous bet number by press thereof, thereby variable display of the symbols is started on the symbol transmissive areas 6 to 8 of the lower liquid crystal display 4. To the REPEAT BET button 12, a repeat bet switch 78 mentioned later is attached, and when the REPEAT BET button 19 is pressed a switch signal is output to the CPU 71 from the repeat bet switch 78 based on press of the REPEAT BET button 19. Here, as the bet number which can be betted by press of the REPEAT BET button 19, there may exist 1 to 5 (MAX) bets.

As for the 3-BET button 20, every the 3-BET button 20 is pressed three credits are betted. To this 3-BET button 20, a 3-BET switch 79 mentioned hereinafter is attached and when the 3-BET button 20 is pressed a switch signal is output to the CPU 71 from the 3-BET switch 79.

And the MAX BET button 21 is the button to start games from 5 bets, which are the maximum bet number capable of being betted for one game on the basis of press thereof. To the MAX BET button 21, a MAX BET switch 80 mentioned later is attached and when the MAX BET button 21 is pressed a switch signal is output to the CPU 71 from the MAX BET switch 80 on the basis of press thereof.

The start button 17 is a button to rotate the reels 25 to 27 and start variable display of the symbols based on the bet number betted by each of the BET buttons 18 to 21. To the start button 17, a start switch 81 is attached, and when the start button 17 is pressed a switch signal is output to the CPU 71 from the start switch 81. The symbols started to scroll in the symbol transmissive areas 6 to 8 are sequentially stopped in order of the left symbol transmissive area 6, the center symbol transmissive area 7 and the right symbol transmissive area 8 when seeing the front plane of the lower liquid crystal display 4, after a predetermined time (in the embodiment, 3 seconds after the start button is pressed) elapses.

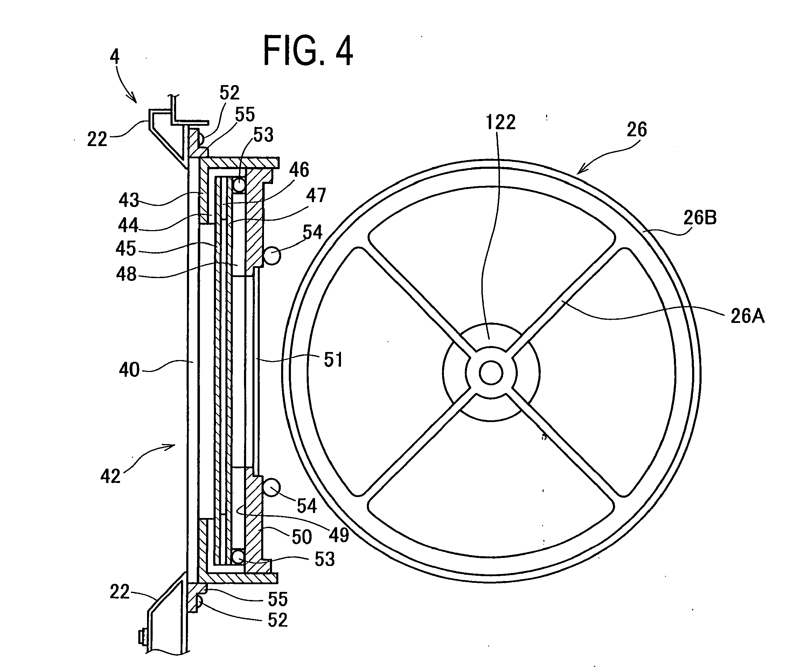

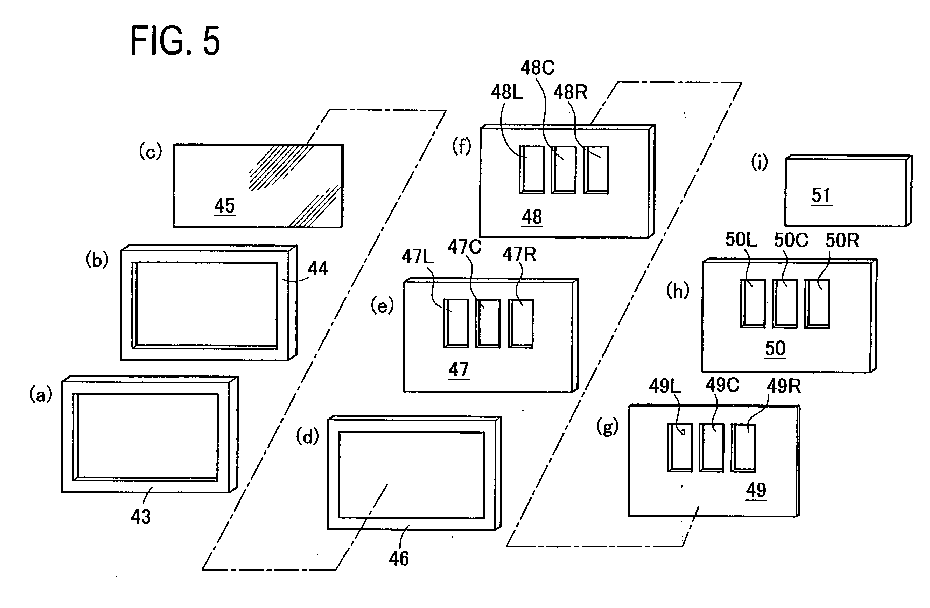

Next, with reference to Figs. 3 to 5, it will be described in detail the construction of the lower liquid crystal display 4 and the reels 25 to 27 arranged within the cabinet 2 which is disposed at the rear side of the lower liquid crystal display 4. Fig. 3 is a perspective view showing the lower liquid crystal display and the reels, Fig. 4 is a sectional view showing the lower liquid crystal display and the reels which are sectioned along a A-A line of Fig. 3, and Fig. 5 is an exploded perspective view showing the lower liquid crystal display of the slot machine according to the embodiment.

In Figs. 3 and 4, the lower liquid crystal display 4 is arranged within a display window 42 of a device front panel 22 positioned at the front center part of the cabinet 2 in the slot machine 1, with a touch panel 40 arranged at the front side (the left side in Fig. 4) of the lower liquid crystal display 4. And at the rear side (the right side in Fig. 4) of the lower liquid crystal display 4, three reels 25 to 27, on the outer peripheries of which the symbol columns 60 to 62 are formed, are supported in a parallel state so that the reels 25 to 27 become independently rotatable.

Therefore, as shown in Figs. 3 and 4, the lower liquid crystal display 4 is arranged in front of three reels 25 to 27. And a base game mentioned later is conducted by using the symbol columns 60 to 62 which can be seen through the symbol transmissive areas 6 to 8 of the lower liquid crystal display 4.

First, describing the reels 25 to 27, as shown in Fig. 3, the reels 25 to 27 according to the embodiment are supported in a parallel state within the cabinet 2 positioned at the rear side of the lower liquid crystal display 4 so as to become independently rotatable.

As shown in Figs. 3 and 4, the reels 25 to 27 according to the embodiment are basically constructed from reel drums 25A to 27A, reel strips 25B to 27B adhered on the outer peripheries of the reel drums 25A to 27A and stepping motors 121 to 123 to rotate and drive the reel drums 25A to 27A.

Each of the reel drums 25A to 27A is formed from transparent resin with durability and constructs a whole backbone of each of the reels 25 to 27. And to the center of each of the reel drums 25A to 27A, each of the stepping motors 121 to 123 is arranged. Further, the reel drums 25A to 27A are driven to rotate in a predetermined rotation direction (counterclockwise direction in Fig. 4) with the reel strips 25B to 27B.

And each of the reel strips 25B to 27B is a sheet member on which plural symbols (10 symbols in the embodiment) are arranged with the same interval so as to sandwich a blank (space area) between two symbols. Concretely, each of the reel strips 25B to 27B is formed by painting a color (for example, white color) on the resin material and printing the symbols with a color on the colored resin material. Here, each of the reel strips 25B to 27B is made semi-transmissive.

Here, the reel 25 faces to the symbol transmissive area 6 (see Fig. 1) formed on the lower liquid crystal display 4, and the symbol column 60 disposed on the reel strip 25B can be seen and recognized through the symbol transmissive area 6. And the reel 26 faces to the symbol transmissive area 7 (see Fig. 1) formed on the lower liquid crystal display 4 and the symbol column 61 disposed on the reel strip 26B can be seen and recognized through the symbol transmissive area 7. Further, the reel 27 faces to the symbol transmissive area 8 (see Fig. 1) and the symbol column 62 formed on the reel strip 27B can be seen and recognized through the symbol transmissive area 8. The symbol columns 60 to 62 will be described in detail hereinafter.

Next, the construction of the lower liquid crystal display 4 will be described with reference to Figs. 4 and 5. As shown in Figs. 4 and 5, the lower liquid crystal display 4 is constructed by arranging from the front side of the slot machine 1; the transparent touch panel 40, the reel glass base 43, the bezel metal frame 44, the transparent liquid crystal panel 45, the liquid crystal holder 46, the diffusion sheet 47, the light guiding plate 48, the white reflector 49, the rear holder 50 and the antistatic sheet 51. In the diffusion sheet 47, three openings 47L, 47C, 47R are formed. Similarly, in the light guiding plate 48, the reflector 49 and the rear holder 50, three openings 48L, 48C, 48R, 49L, 49C, 49R, 50L, 50C, 50R are formed respectively, so as to coincide with the openings 47L, 47C, 47R. Here, the openings 47L - 50L construct the symbol transmissive area 6 (see Fig. 1) by superimposing so as to coincide with each other. Similarly, the openings 47C - 50C construct the symbol transmissive area 7 and the openings 47R - 50R construct the symbol transmissive area 8.

Here, the transparent liquid crystal panel 45 is formed by enclosing liquid crystal in a space formed between a transparent plate such as a glass plate on which thin-layered transistor layer is formed and another transparent plate facing thereto. Display mode of the transparent liquid crystal panel 45 is set to normally white. Here, "normally white" means a state that white displaying state (in which light can transmit toward the display plane, that is, light transmitted can be seen and recognized from the outside) is realized under the condition that the liquid crystal panel is not driven.

And the symbol transmissive areas 6 ~ 8 constructed from the openings 47L, 47C, 47R of the diffusion sheet 47 and the openings 48L, 48C, 48R of the light guiding plate 48 construct the light transmissive areas to retain visibility.

In order to install the lower liquid crystal display 4 to the display window 42 of the device front panel 22, as shown in Fig. 4, brackets 55 are screwed to the rear side of the device front panel 22 by screws 52.

And at an upper and lower ends of the light guiding plate 48, a pair of cathode ray tubes 53 are arranged as light source of the liquid crystal panel 45. And at an upper and lower positions in the rear side of each of openings 50L, 50C, 50R in the rear holder 50, a pair of cold cathode ray tubes 54 to illuminate the reels 25 - 27 are arranged.

The liquid crystal panel 45 is a transparent electric display panel on which transparent electrodes such as Ito are formed, and the circumference in rear side of the display portion of the liquid crystal panel 45 is held by the liquid crystal holder 46. The light guiding plate 48 is made of the light transmitting resin panel, and in the light guiding plate 48 lens cut portions are formed, the lens cut portions guiding light emitted from the cathode ray tubes 53 positioned at side positions to the rear side of the liquid crystal panel 45. The light diffusion sheet 47 is made from a light transmitting resin sheet and diffuses light led thereto by the light guiding plate 48 and levels light irradiated to the liquid crystal panel 45. The liquid crystal holder 46 for holding the liquid crystal panel 45, the diffusion sheet 47 and the light guiding plate 48 are assembled into one-piece construction and circumference thereof is inserted in the bezel metal frame 44. Thereby, the front side of the display portion in the liquid crystal panel 45 is retained by the bezel metal frame 44.

Circumferences of the liquid crystal holder 46, the light diffusion sheet 47 and the light guiding plate 48, which are inserted in the bezel metal frame 44 and assembled into one-piece construction, is further inserted in the reel glass base 43 and retained by the reel glass base 43 in a state that the front display plane of the liquid crystal panel 45 is opened. The transparent touch panel 40 is pressed to the front face of the reel glass base 43 and superimposed on the front face of display portion of the liquid crystal panel 45 based on that the reel glass base 43 is attached to the device front panel 22 by screws 52.

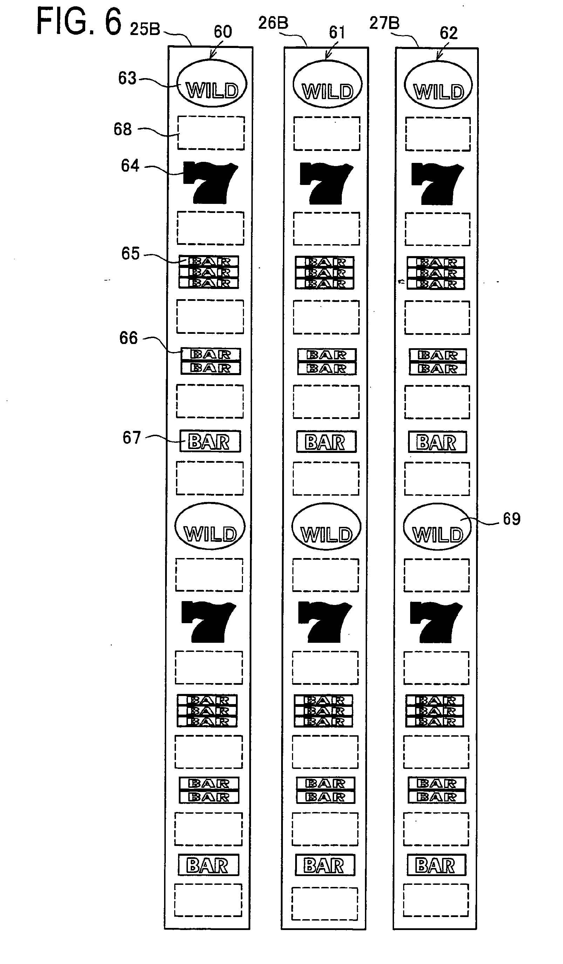

Next, each of the symbol columns 60 - 62, which is arranged on the outer periphery of each of the reels 25 - 27 and variably displayed and stopped in each of the symbol transmissive areas 6 ~ 8, will be described. Fig. 6 is a schematic view showing symbol columns each of which is formed on an outer periphery of the reel of the slot machine according to the embodiment.

There totally exist three symbol columns which are printed on the reel strips 25B - 27B disposed on the outer peripheries of the reels 25 - 27 and variably displayed and stopped in the symbol transmissive areas 6 ~ 8. The symbol column 60 is a symbol column which is variably displayed in the symbol transmissive area 6, the symbol column 61 is a symbol column which is variably displayed in the symbol transmissive area 7 and the symbol column 62 is a symbol column which is variably displayed in the symbol transmissive area 8. And the base game mentioned later is conducted by using each of the symbol columns 60 - 62.

Here, each of the symbol columns 60 - 62 has the same symbol arrangement which is constructed by voluntarily combining WILD symbols 63 and 69, a seven symbol 64, a triple BAR symbol 65, a double BAR symbol 66, a single BAR symbol 67 and a blank (area where no symbol exists) 68.

And when each of the symbol columns 60 - 62, which are scrolled in each of the symbol transmissive areas 6 to 8, is stopped and displayed, the symbols stopped and displayed are determined beforehand based on a result of internal lottery mentioned later and drive of the stepping motors 121 - 123 rotating the reels 25 - 27 is controlled according to the internal lottery result.

And various winning symbol combinations are set beforehand based on a plurality kinds of symbol combinations, and when the symbol combination (symbol combination of winning symbols) corresponding to the winning symbol combination is stopped on a pay line L (see Fig. 1), credits corresponding to the winning symbol combination are added.

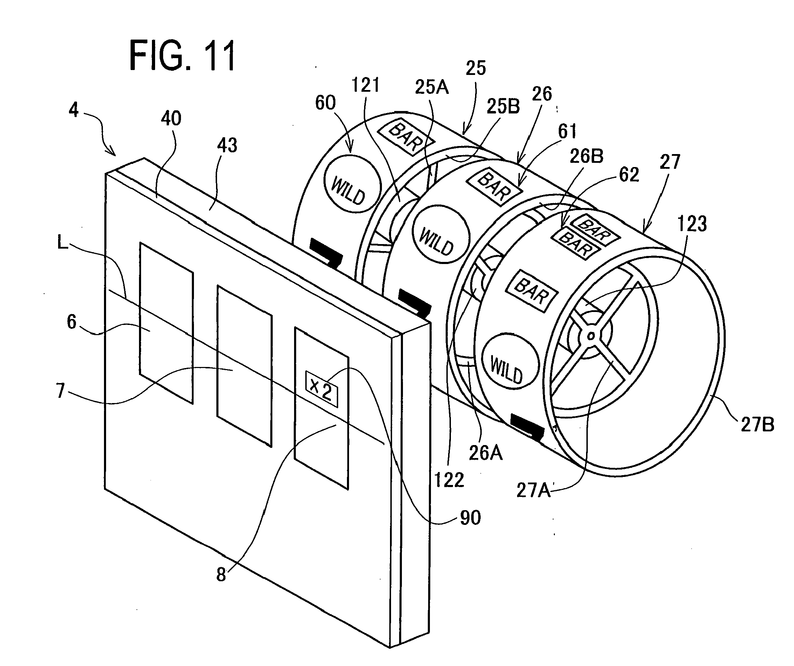

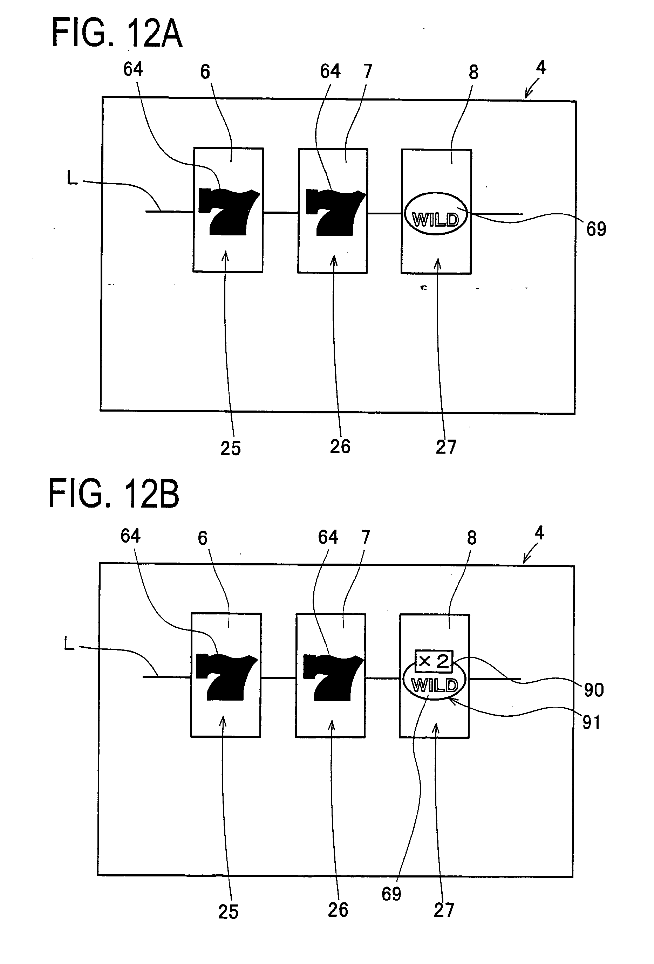

Further, in the slot machine 1 of the embodiment, when one WILD symbol 69 is stopped and displayed on the pay line L among two WILD symbols 63 and 69 constructing the symbol column 62 and the winning symbol combination is realized, an auxiliary symbol 90 is newly displayed in the symbol transmissive area 8, as mentioned later, thereby the WILD symbol 69 is changed to a DOUBLE symbol 91 (see Figs. 11 and 12).

And when it is conducted the so-called base game in which the symbol columns 60 - 62 are variably displayed and stopped by using the lower liquid crystal display 4 and the reels 25 - 27, the liquid crystal existing in the symbol transmissive areas 6 ~ 8 is not driven (voltage is not added between the transparent plates at places corresponding to the symbol transmissive areas 6 - 8 in the liquid crystal panel 45) and light transmissive ratio of the symbol transmissive area 6 - 8 is increased. Here, the lower liquid crystal display 4 is generally set to the normally white mode, thus the symbol columns 60 - 62 of the reels 25 - 27 are transmitted through the symbol transmissive areas 6 ~ 8. As a result, the symbol columns 60 - 62 can be seen and recognized by the player.

On the other hand, for example, in the bonus game in which the game is conducted by images displayed on an entire plane of the lower liquid crystal display 4, the liquid crystal existing corresponding to the symbol transmissive areas 6 - 8 of the lower liquid crystal display 4 is also driven (voltage is added between the transparent plates at places corresponding to the symbol transmissive areas 6 - 8 in the liquid crystal panel 45) and light transmissive ratio of the symbol transmissive area 6 - 8 is decreased. As a result, the symbol columns 60 - 62 of the reels 25 ~ 27 are not transmitted through the symbol transmissive areas 6 ~ 8, thus the player can only see and recognize the image displayed in the symbol transmissive areas 6 - 8 by the lower liquid crystal display 4.

Further, in the slot machine 1 according to the embodiment, when the WILD symbol 69 of the symbol column 62 is stopped and displayed on the pay line L and the winning symbol combination is realized, the liquid crystal existing in the symbol transmissive area 8 is driven and the auxiliary symbol 90 is displayed in the symbol transmissive area 8. As a result, the WILD symbol 69 is changed to the DOUBLE symbol 91, as mentioned later (see Figs. 11 and 12).

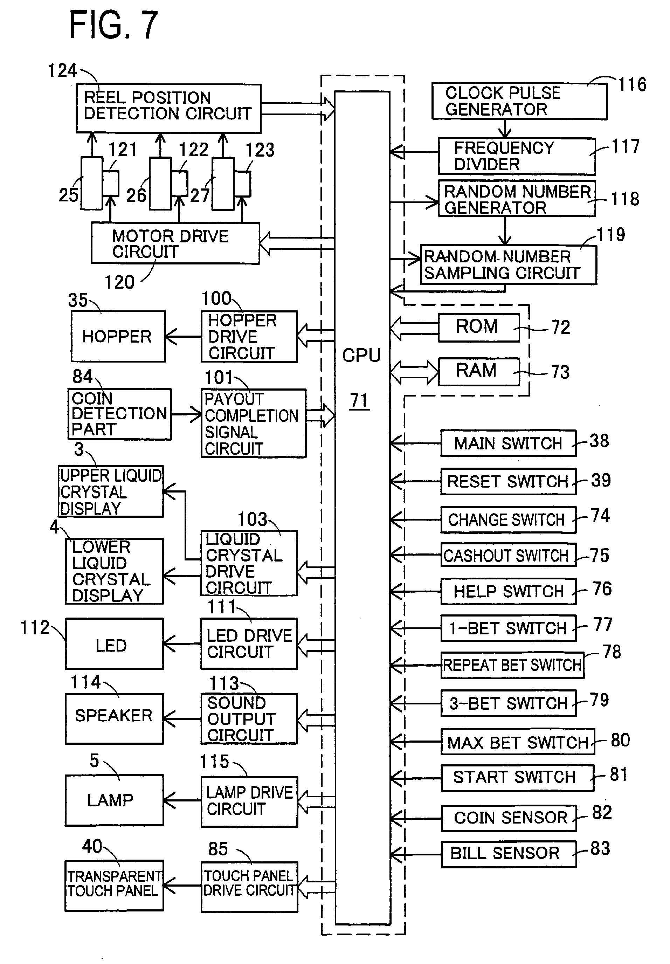

Next, it will be described a construction of the control system in the slot machine 1 with reference to Fig. 7. Fig. 7 is a block diagram schematically showing the control system in the slot machine 1.

In Fig. 7, the control system of the slot machine 1 is basically constructed from the CPU 71, and a ROM 72 and a RAM 73 are connected to the CPU 71. The ROM 72 stores a main process program mentioned later, a base game process program, a bonus game process program, a lottery table utilized in a lottery of the symbols stopped and displayed in the base game, and various programs necessary for controlling the slot machine 1 and various data tables and the like. And the RAM 73 is a memory for temporarily storing various data calculated by the CPU 71.

And to the CPU 71, a clock pulse generator 116 for generating standard clock pulses and a frequency divider 117 are connected, and a random number generator 118 for generating random numbers and a random number sampling circuit 119 are also connected. Random number sampled by the random number sampling circuit 119 is utilized in various lotteries of the winning combinations. Further, to the CPU 71, the main switch 38, the reset switch 39, the change switch 74 attached to the change button 11, the cashout switch 75 attached to the cashout button 12, the help switch 76 attached to the help button 13, the 1-BET switch 77 attached to the 1-BET button 18, the REPEAT BET switch 78 attached to the REPEAT BET button 19, the 3-BET switch 79 attached to the 3-BET button 20, the MAX BET switch 80 attached to the MAX BET button 21, the start switch 81 attached to the start button 17 are connected respectively. The CPU 71 controls the slot machine 1 to execute various operations corresponding to each button, based on the switch signal output from each switch when such buttons are pressed.

To the CPU 71, three stepping motors 121 to 123 for rotating each of the reels 25 to 27 through a motor drive circuit 120 are connected, and also a reel position detection circuit 124 is connected. When a motor drive signal is output to the motor drive circuit 120, each of the stepping motors 121 to 123 is driven to rotate by the motor drive circuit 120, thereby each of the reels 25 to 27 is rotated.

At that time, after each of the reels 121 to 123 is started to rotate, the number of drive pulses provided to each of the stepping motors 121 to 123 is calculated and the calculated value is written in the predetermined area of the RAM 73. And the reset pulse is output every one rotation of the reel 121, 122, 123 and such reset pulse is input to the CPU 72 through the reel position detection circuit 124. When the reset pulse is input to the CPU 71, the calculated value written in the RAM 73 is cleared in "0", and the CPU 71 recognizes the symbol rotational position in each of the reels 121 to 123, based on the calculated value corresponding to the rotational position of each of the reels 121 to 123 within one rotation and the symbol table in which the rotational position of each of the reels 121 to 123 stored in the ROM 72 and the symbols formed on outer peripheral plane of each of the reels 121 to 123 are corresponded with each other.

Further, to the CPU 71, the coin sensor 82 positioned in the coin insertion slot 14 and the bill sensor 83 positioned in the bill insertion portion 15 are connected respectively. The coin sensor 82 detects coins inserted from the coin insertion slot 14 and the CPU 71 calculates the number of inserted coins based on the coin detection signal output from the coin sensor 82. The bill sensor 83 detects the kind and sum of bill and the CPU 71 calculates the number of coins equivalent to sum of bill, based on the bill detection signal output from the bill sensor 83.

To the CPU 71, a hopper 35 is connected through a hopper drive circuit 100. When a drive signal is output to the hopper circuit 100 from the CPU 71, the hopper 35 pays out predetermined number of coins from the coin payout chute 30.

And to the CPU 71, a coin detection portion 84 is connected through a payout completion signal circuit 101. The coin detection portion 84 is arranged in the coin payout chute 30 and when the coin detection portion 84 detects that a predetermined number of coins are paid out from the coin payout chute 30, the coin payout completion signal is output to the payout completion signal circuit 101 from the coin detection portion 84. Based on this, the payout completion signal circuit 101 outputs the payout completion signal to the CPU 71. Further, to the CPU 71, the upper liquid crystal display 3 and the lower liquid crystal display 4 are connected through a liquid crystal drive circuit 103. The upper liquid crystal display 3 and the lower liquid crystal display 4 are controlled by the CPU 71.

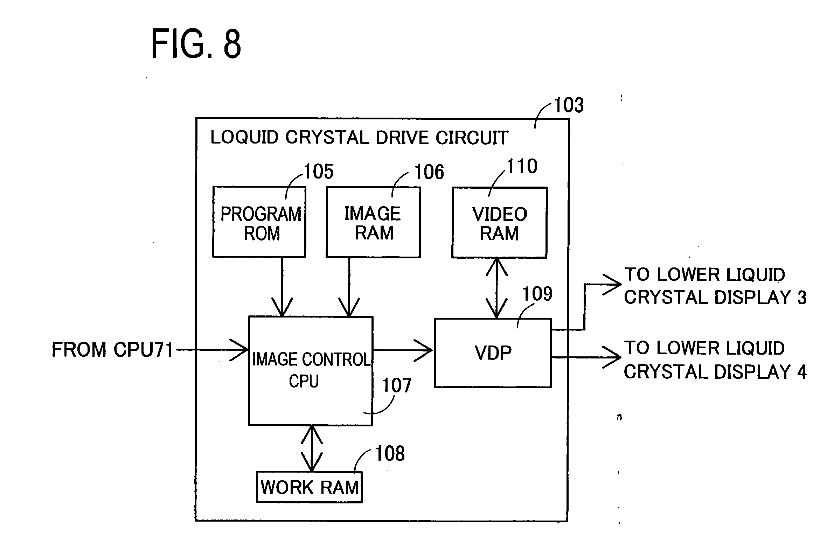

At this point of view, as shown in Fig. 8, the liquid crystal drive circuit 103 is constructed from a program ROM 105, an image ROM 106, an image control CPU 107, a work RAM 108, a VDP (Video Display Processor) 109 and a video RAM 110. And in the program ROM 105, an image control program concerning with display on the upper liquid crystal display 3 and the lower liquid crystal display 4 and various selection tables are stored. Further, in the image ROM 106, for example, it is stored dot data for forming images such as the auxiliary symbol 90 (see Figs. 11 and 12) displayed in the symbol transmissive area 8 mentioned later.

And the image control CPU 107 determines images displayed on the upper liquid crystal display 3 and the lower liquid crystal display 4 among the dot data stored in the image ROM 106 beforehand, according to the image control program stored in the program ROM 105 based on parameters set by the CPU 71. And the work RAM 108 functions as the temporary memory when the above image control program is executed by the image control CPU 107. Further, the VDP 109 forms images corresponding to display contents determined by the image control CPU 107 and outputs the images to the upper liquid crystal display 3 and the lower liquid crystal display 4. Here, the video RAM 110 functions as the temporary memory when images are formed by the VDP 109.

And to the CPU 71, LEDs 112 are connected through a LED drive circuit 111. A plurality of LEDs 112 are arranged on the front plane of the slot machine 1 and the LEDs 112 are controlled so as to turn on based on the drive signals from the CPU 71 when various effects are conducted. Further, a sound output circuit 113 and a speaker 114 are connected to the CPU 71 and the speaker 114 produces various effective sounds when various effects are conducted based on the output signal from the sound output circuit 113.

Further, to the CPU 71, the lamp 5 is connected through a lamp drive circuit 115. The lamp 5 is provided on the upper part of the slot machine 1 (see Fig. 1), and when the change button 11 is pressed, the lamp 5 is controlled to turn on through the lamp drive circuit 115 based on the drive signal from the CPU 71.

And to the CPU 71, the transparent touch panel 40 is connected through a touch panel drive circuit 85. The transparent touch panel 40 is arranged on the image plane of the lower liquid crystal display 4 and can judge a position of the portion touched and a moving direction of the touched portion through the touch panel drive circuit 85, based on the coordinate position information of the touched portion by the player.

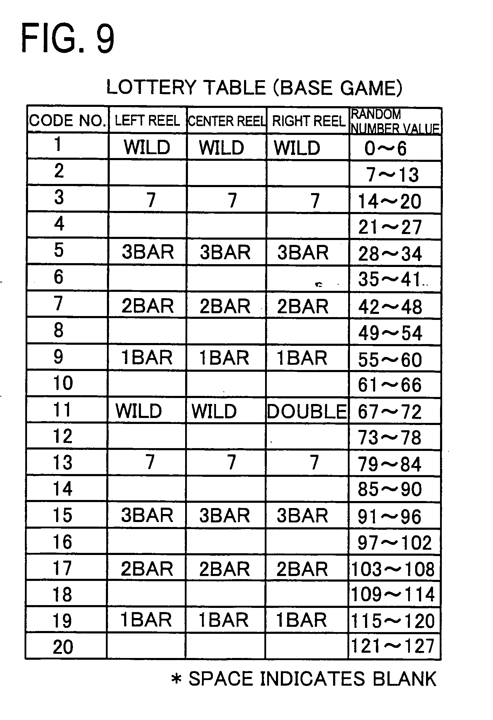

Next, in a case that the base game is conducted in the slot machine 1, it will be described with reference to Fig. 9 a lottery table utilized when the symbols stopped and displayed on the activated pay line L are determined. Here, the base game is conducted by using three symbol transmissive areas 6 ~ 8 through which each of the symbols described on the reels 25 - 27 can be seen. Fig. 9 is an explanatory view showing a lottery table of the slot machine according to the embodiment.

The symbols stopped and displayed on the pay line L are determined every each of the symbol columns 60 - 62. In order to realize this, one of the code numbers "0" - "20" is allotted to each symbol constructing each of the symbol columns 60 - 62 shown in Fig. 6 from the uppermost symbol, and it is provided the lottery table shown in Fig. 9. Further, three random number values are sampled corresponding to each of the reels 25 - 27 through the random number sampling circuit 119.

Here, in Fig. 9, for explanatory convenience, the reel 25, on which the symbol column 60 capable of being seen through the symbol transmissive area 6 is formed, is described as the "left reel", the reel 27, on which the symbol column 62 capable of being seen through the symbol transmissive area 8 is formed, is described as the "right reel", and the reel 26, on which the symbol column 61 capable of being seen through the symbol transmissive area 7 is formed, is described as the "center reel".

As for the "left reel" corresponding to the symbol column 60 of the symbol transmissive area 6, if the random number value sampled by the random number sampling circuit 119 lies in a range of 0 - 6, the WILD symbol 63 allotted to the code number "1" is stopped and displayed on the pay line L. And if the random number value lies in a range of 14 - 20, the seven symbol 64 allotted to the code number "3" is stopped and displayed on the pay line L. If the random number value lies in a range of 28 - 34, the triple BAR symbol 65 allotted to the code number "5" is stopped and displayed on the pay line L, and if the random number value lies in a range of 42 - 48, the double BAR symbol 66 allotted to the code number "7" is stopped and displayed on the pay line L. If the random number value lies in a range of 55 - 60, the single BAR symbol 67 allotted to the code number "9" is stopped and displayed on the pay line L, and if the random number value lies in a range of 67 - 72, the WILD symbol 63 allotted to the code number "11" is stopped and displayed on the pay line L. If the random number value lies in a range of 79 - 84, the seven symbol 64 allotted to the code number "13" is stopped and displayed on the pay line L, and if the random number value lies in range of 91 - 96, the triple BAR symbol 65 allotted to the code number "15" is stopped and displayed on the pay line L. If the random number value lies in a range of 103 - 108, the double BAR symbol 66 allotted to the code number "17" is stopped and displayed on the pay line L, and if the random number value lies in a range of 115 - 120, the single BAR symbol 67 allotted to the code number "19" is stopped and displayed on the pay line L. If the random number value lies in a range of the values other than above values, the blank symbol 68 is stopped and displayed on the pay line L.

Here, as for the "center reel", the lottery table therefor is as same as that of the "left reel". On the other hand, as for the "right reel", the lottery table for the "right reel" is different from the following point. That is to say, if the random number value lies in a range of 67 - 72, the DOUBLE symbol 91 allotted to the code number "11" is stopped and displayed on the pay line L.

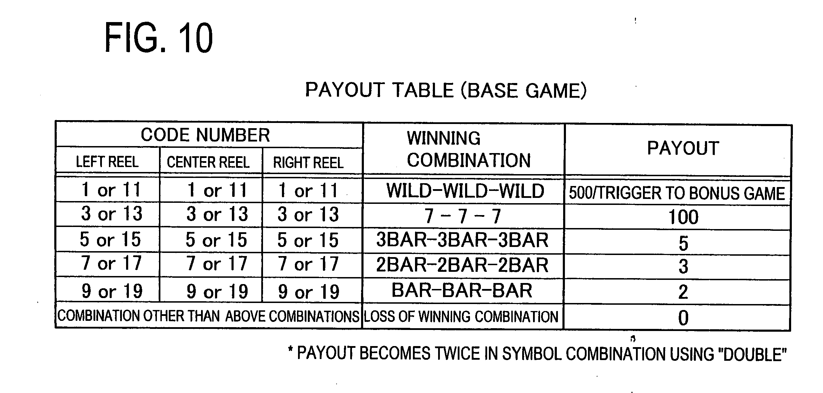

Here, if it is determined that the DOUBLE symbol 91 is stopped and displayed, the WILD symbol 69 arranged in the symbol column 62 is once stopped and displayed on the pay line L. And in a case that the symbol combination including the WILD symbol 69 stopped and displayed on the pay line L corresponds to one of the symbol combinations with the winning symbols constructing the winning symbol combination (symbol combination shown in Fig. 10), the auxiliary symbol 90 is displayed on the symbol transmissive area 8 and the DOUBLE symbol 91 is newly displayed by combining the WILD symbol 69 which is transmitted through the symbol transmissive area 8 and displayed and the auxiliary symbol 90 (see Figs. 11 and 12). On the other hand, even in a case that it is determined that the DOUBLE symbol 91 is stopped and displayed, if the symbol combination including the WILD symbol 69 stopped and displayed on the pay line L does not correspond to any of the symbol combinations with the winning symbols constructing the winning symbol combination (symbol combination shown in Fig. 10), the WILD symbol 69 itself is displayed on the symbol transmissive area 8 without displaying the auxiliary symbol 90.

Next, in a case that the base game is conducted by using three symbol transmissive areas 6 - 8 in the slot machine 1, the winning symbol combinations and the payouts thereof will be described with reference to Fig. 10. Fig. 10 is an explanatory view showing a payout table showing winning symbol combinations and payouts in the slot machine, in a case that the base game is conducted by using three symbol transmissive areas 6 ~ 8. In Fig. 10, if the code number of the "left reel", the "center reel" and the "right reel" is "1" or "11", the bonus game is won. In this case, the WILD symbols 63 are stopped and displayed on the pay line L in the symbol transmissive areas 6 ~ 8, and the game condition can be shifted to the bonus game while obtaining the payout of "500" coins. Here, the bonus game is a game conducted after the base game is terminated and the player can get many coins in many cases.

And there exist the winning symbol combinations such as "7-7-7", "3BAR-3BAR-3BAR", "2BAR-2BAR-2BAR" and "1BAR-1BAR-1BAR" according to the combination of the code numbers, and as shown in Fig. 10, the payout is determined based on each of the winning symbol combinations.

Here, the WILD symbol 63 is an almighty symbol which is substitutable for any of the seven symbol 64, the triple BAR symbol 65, the double BAR symbol 66 and the single BAR symbol 67. For example, if the symbol combination is "7-WILD-7", the payout of "100" coins can be obtained. Further, the DOUBLE symbol 91, which is realized by changing the WILD symbol 69, has a characteristic of the WILD symbol and if the winning symbol combination is won by using the DOUBLE symbol 91, the payout thereof can become twice. Therefore, for example, if the symbol combination is "2BAR-"2BAR-DOUBLE", the payout of 6 coins can be obtained.

On the other hand, if the combination of the code numbers in the "right reel", the "center reel" and the "left reel" is a combination other than the above combinations, the winning combination is lost. In this case, although any one of the WILD symbol 63, 69, the seven symbol 64, the triple BAR symbol 65, the double BAR symbol 66, the single BAR symbol 67 and the blank 68, each of which corresponds to each code number, is stopped and displayed on the pay line L in each of the symbol transmissive areas 6 - 8, the payout thereof is nothing.

Next, in a case that it is determined that the DOUBLE symbol is stopped and displayed in the "right reel" based on the lottery table and any one of the winning symbol combinations is won (if the symbols stopped and displayed on the pay line L become the winning symbol combination), the display mode, according to which the DOUBLE symbol 91 is displayed by using the reel 27 and the lower liquid crystal display 4, will be described with reference to Figs. 11 and 12.

In the slot machine 1 according to the embodiment, as mentioned, when the game is started, the symbols stopped and displayed on the pay line L are determined every each of the reels based on the internal lottery according to the random number values. Especially, if the random number value of the "right reel" variably displaying the symbols in the symbol transmissive area 8 lies in a range of 67 - 72 and any one of the winning symbol combinations is won, the DOUBLE symbol 91 is stopped and displayed.

Here, the DOUBLE symbol 91 is constructed, as shown in Figs. 11 and 12 (B), by combining and displaying the WILD symbol 69 formed on the reel 27 and the auxiliary symbol 90 displayed in the symbol transmissive area 8. Concretely, at first, as shown in Fig. 12 (A), the reel 27 is controlled to stop so as to the WILD symbol 69 is positioned on the pay line L.

Thereafter, after a predetermined time (for example, 2 seconds) elapses, the auxiliary symbol 90 represented by "X 2" is newly displayed in the symbol transmissive area 8. As a result, as shown in Fig. 12 (B), the WILD symbol 69 transmitted and displayed through the symbol transmissive area 8 and the auxiliary symbol 90 displayed in the symbol transmissive area 8 are superimposed with each other, thereby the WILD symbol 69 is changed to the DOUBLE symbol 91.

Therefore, by combining one symbol on the reel transmitted and displayed through the liquid crystal display and the other symbol newly displayed while using the transmissive liquid crystal display, it can be realized variegated effect to change one symbol to the other symbol which is finally displayed. Further, since the symbols 69 and 90 are displayed in an superimposed state by two display devices which are physically distant, effect with cubic feeling, which cannot be realized by one liquid crystal display, can be done.

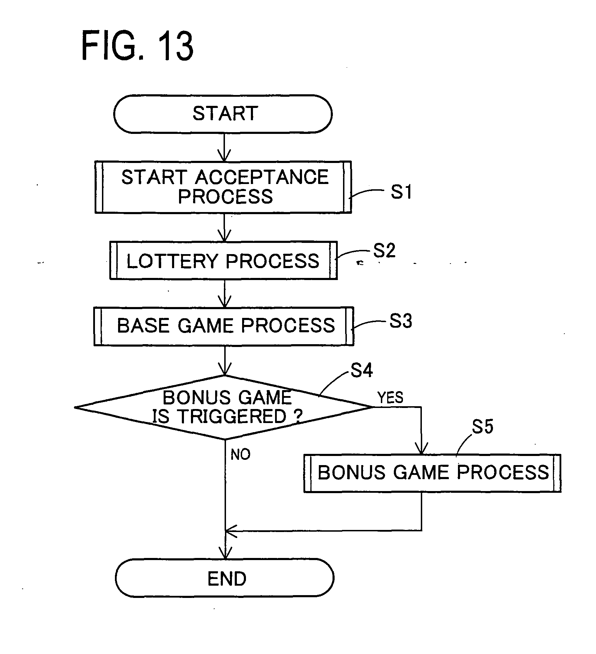

Next, a main process program executed in the slot machine 1 constructed according to the above will be described with reference to Fig. 13. Fig. 13 is a flowchart of a main process program executed in the slot machine 1 of the embodiment. Here, the programs represented by the flowcharts shown in Figs. 13 to 16 are stored in the ROM 27 and the RAM 73 provided with the slot machine 1 and are executed by the CPU 71.

At first, in step (abbreviated as "S" hereinafter) 1, start acceptance process is executed. This start acceptance process is the process to accept the switch signal output from the start switch 81, the REPEAT BET switch 78, the 1-BET switch 77, the 3-BET switch 79 or the MAX BET switch 80, based on operation of the start button 17, the REPEAT BET button 21, the 1-BET button 18, the 3-BET button 20 or the MAX BET button 21. At the time that the switch signal output from the REPEAT BET switch 78, the MAX BET switch 80 or the start switch 81 is accepted, the game is started.

In S2, various lottery processes are conducted based on the switch signal output from the start switch 81, the REPEAT BET switch 78, the 1-BET switch 77, the 3-BET switch 79 or the MAX BET switch 80. Concretely, in the base game which is executed by using the symbol transmissive areas 6 ~ 8, the lottery of the symbols stopped and displayed on the pay line L is done by using the random number value sampled through the random number sampling circuit 119 every each of the reels and the lottery table (see Fig. 9), thereby the symbols stopped and displayed are determined.

In S3, the base game process mentioned later (variable and stop display of the symbols and payout of the credits) is conducted. And in S4, it is determined whether or not a trigger of the bonus game is won according to a lottery result in S2. Concretely speaking, in the lottery process of S2, if the random number value for the "left symbol", the "center symbol", the "right symbol" sampled through the random number sampling circuit 119 lies in a range of "0 - 6", the bonus game is won (S4: YES), thus procedure shifts to S5. In S5, a bonus realization flag retained in the RAM 73 is switched ON, and for example, a message "START BONUS GAME!" is displayed on the upper liquid crystal display 3. Thereby, it is informed that the bonus game is realized, thereafter a predetermined bonus game process is continuously conduced. The bonus game is a game which is executed by using images displayed on the entire image plane of the lower liquid crystal display 4 and the player can get credits in various modes during the bonus game. On the other hand, if the trigger of the bonus game is not won (S4: NO), the main process is terminated.

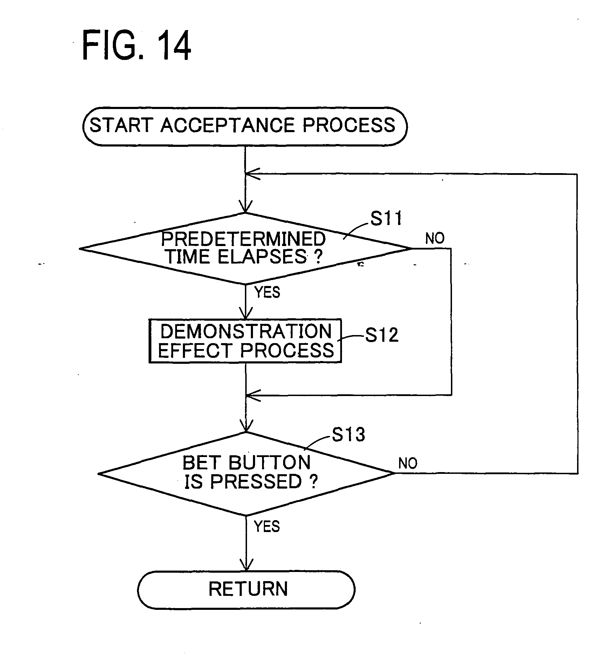

Next, the start acceptance process program in S1 conducted in the slot machine 1 will be described with reference to Fig 14. Fig. 14 is a flowchart of a start acceptance process program.

At first, in s11, it is determined whether or not a predetermined time (15 seconds in the embodiment) elapses. Here, if it is determined that the predetermined time does not elapse (S11: NO), procedure shifts to S13. On the other hand, if it is determined that the predetermined time elapses (S11: YES), the demonstration effect is conducted on the upper liquid crystal display 3 and the lower liquid crystal display 4 in S12, thereafter procedure shifts to S 13.

In S13, it is determined whether or not the start button 17, the REPEAT BET button 19 or the MAX BET button 21 is operated. If it is determined that the start button 17 is operated, the game is started with the bet number set by the 1-BET button 18 or 3-BET button 20. And if it is determined that the REPEAT BET button 19 is operated, the game is started with the same bet number as that set in the previous game. Further, if it is determined that the MAX BET button 21 is operated, the game is started with the maximum bet number (5 bet number in the embodiment) which can be betted for one game.

And if it is determined that none of the above buttons are operated (S13: NO), procedure shifts to S11 and the above processes are repeated. On the other hand, if it is determined that any of the above buttons is operated (S13: YES), procedure returns to the main process program and shifts to S2 even while the demonstration effect is done.

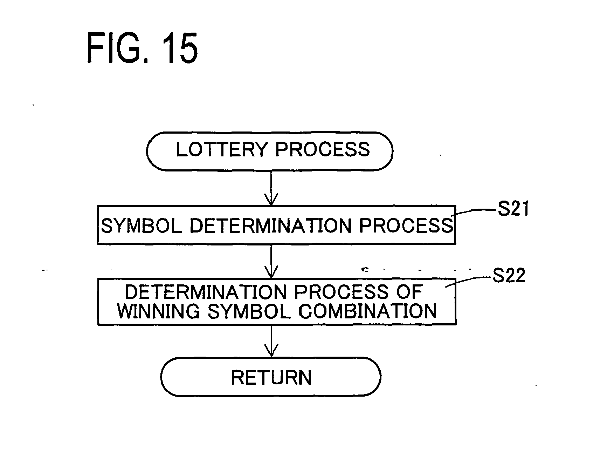

Next, the lottery process program conducted in the slot machine 1 will be described with reference to Fig. 15. Fig. 15 is a flowchart of a lottery process program.

In S2 of the main process program, the lottery process is executed. In order to realize this, procedure first shifts to S21 in Fig. 15 and a symbol determination process is conducted. Here, the symbols stopped and displayed on the pay line L in the base game are determined every each of the reels 25 - 27. Concretely, as mentioned, three random number values are sampled through the random number sampling circuit 119 so as to correspond to each of the reels 25 - 27 and the stop symbols are determined by the code numbers based on the lottery table in Fig. 9. And after the symbols stopped and displayed on the pay line L are determined, a winning symbol combination determination process is conducted in S22, thereafter procedure returns to the main process program and shifts to S3 in the base game. Here, concretely speaking, in the winning symbol combination determination process, the winning symbol combination and the payout thereof are determined based on the table in Fig. 10 through the code numbers determined in S21.

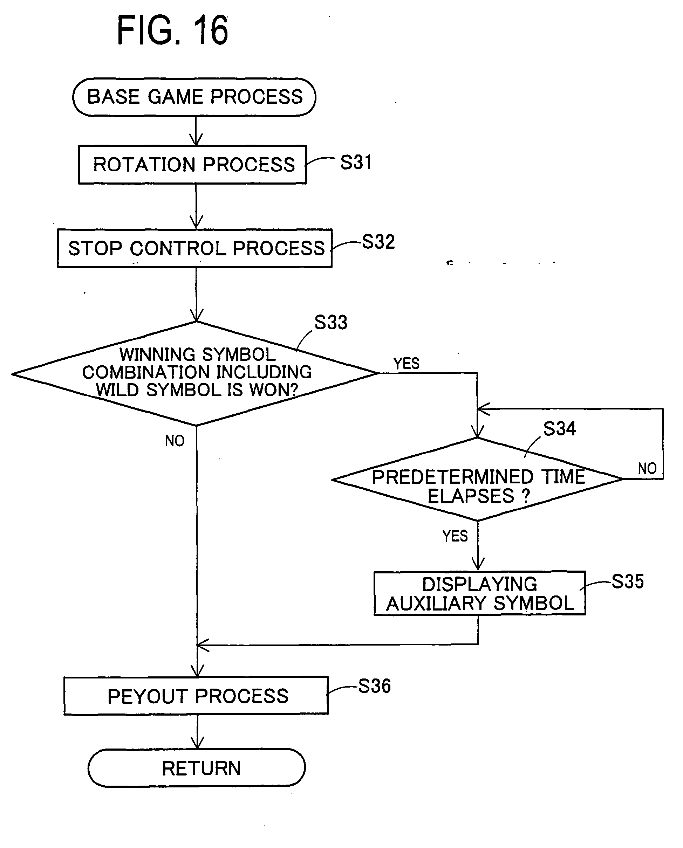

Next, the base game process program conducted in the slot machine 1 will be described with reference to Fig. 16. Fig. 16 is a flowchart of a base game process program.

In the base game process program, at first in S31, the reels 25 - 27 within the cabinet 2 are driven to rotate by the stepping motors 121 - 123, based on the switch signal accepted in the start acceptance process of S1, thereby scroll of each of the symbols is conducted in each of the symbol transmissive areas 6 ~ 8. At that time, since the symbol transmissive areas 6 ~ 8 are in the transmissive state, scroll of each of the symbols on the reels 25 - 27 can be seen and recognized.

And in S32, rotation of the reels 25 - 27 is stopped so that the predetermined symbols are stopped on the pay line L based on the lottery result in S21.

Thereafter, in S33, based on the symbol combination stopped and displayed in each of the symbol transmissive areas 6 - 8 in S32, it is determined whether or not the WILD symbol 69 is stopped and displayed on the pay line L and any of the winning symbol combinations is won.

Further, if it is determined that the WILD symbol 69 is not stopped and displayed on the pay line L or any of the winning symbol combinations is not won (S33: NO), credits corresponding to the payout preset are added based on the symbol combination stopped and displayed on the pay line L and the table in Fig. 10 (S36). Thereafter, procedure returns to the main process program and shifts to the determination process in S4.

And if it is determined that the WILD symbol 69 is stopped and displayed on the pay line L and any of the winning symbol combinations is won (S33: YES), it is determined whether or not a predetermined time (2 seconds in the embodiment) elapses (S34). And if it is determined that the predetermined time does not elapse (S34: NO), procedure waits till the predetermined time elapses. On the other hand, if it is determined that the predetermined time elapses (S34: YES), procedure shifts to S35.

In S35, the auxiliary symbol 90 described as "X 2" is newly displayed in the symbol transmissive are 8 of the lower liquid crystal display 4 (see Figs. 11 and 12). As a result, the WILD symbol 69 transmitted and displayed through the symbol transmissive area 8 and the auxiliary symbol 90 displayed in the symbol transmissive area 8 are superimposed with each other, thereby the WILD symbol 69 is changed to the DOUBLE symbol 91.

Thereafter, credits corresponding to the payout preset are added based on the symbol combination stopped and displayed on the pay line L and the table in Fig. 10 (S36). Thereafter, procedure returns to the main process program and shifts to the determination process in S4.

As mentioned in the above, in the slot machine 1 according to the embodiment, in a case that the WILD symbol 69 is stopped and displayed on the pay line L and any of the winning symbol combinations is won, the auxiliary symbol 90 described as "X 2" is newly displayed in the symbol transmissive area 8 of the lower liquid crystal display 4, thereby the WILD symbol 69 transmitted and displayed through the symbol transmissive are 8 and the auxiliary symbol 90 displayed in the symbol transmissive area 8 are superimposed and displayed with intention and the WILD symbol 69 is changed to the DOUBLE symbol 91. Therefore, by combining one symbol on the reel displayed through the liquid crystal display and the other symbol newly displayed on the liquid crystal display, it can be realized variegated effect to change one symbol to the other symbol which is finally displayed. Accordingly, on the basis of the effect unpredictable for the player, it is improved expectation of the player as if the player can obtain higher payout, thus the player does not get tired. Further, since the symbols 69 and 90 are displayed in a superimposed state by two display devices which are physically distant, effect with cubic feeling, which cannot be realized by one liquid crystal display, can be done.

And the WILD symbol 69 with the characteristic of the WILD symbol is changed and the auxiliary symbol 90 described as "X 2" is combined therewith when the WILD symbol 69 is changed to the DOUBLE symbol 91 according to which the payout becomes higher. Thus, the WILD symbol 69 can be easily changed to the DOUBLE symbol 91.

Here, the present invention is not limited to the above embodiment and various modifications can be done within the scope of the present invention.

For example, in the slot machine 1 of the embodiment, although the WILD symbol 69 is changed to the DOUBLE symbol 91 based on only the result of internal lottery to determine the stop symbols in the base game and whether or not the winning symbol combination is won (S33), for example, a lottery to determine whether or not the WILD symbol 69 is changed to the DOUBLE symbol 91 may be done independent of the lottery to determine the stop symbols.

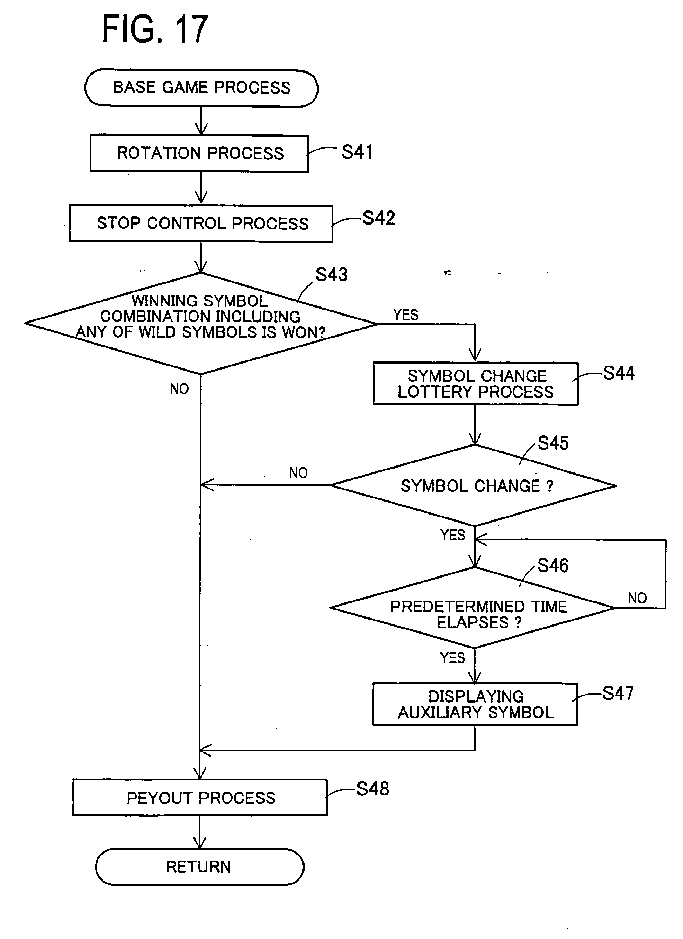

Fig. 17 is a flowchart of a base game process program conducted in the slot machine according to another embodiment.

In the base game process, at first in S41, based on the switch signal accepted in the start acceptance process of S1, the reels 25 - 27 within the cabinet 2 are driven to rotate by the stepping motors 121 ~ 123 and scroll of the symbols is done in each of the symbol transmissive areas 6 -8. At that time, since the symbol transmissive areas 6 - 8 are in the transmissive state, scroll of the symbol on the reels 25 - 27 can be seen and recognized.

And in S42, rotation of the reels 25 - 27 is stopped so that the predetermined symbols are stopped and displayed on the pay line L based on the lottery result in S21.

Thereafter, in S43, based on the symbol combination stopped and displayed in each of the symbol transmissive 6 - 8, it is determined whether or not the WILD symbols 63 or 69 is stopped and displayed on the pay line L and any of the winning symbol combinations is won. Here, in the base game conducted in another embodiment, it is not required that the WILD symbol is the specific WILD symbol 69, thus the WILD symbol may be any of the WILD symbols 63, 69.

And if it is determined that the WILD symbol 63 or 69 is not stopped and displayed on the pay line L or any of the winning symbol combinations is not won (S43: NO), credits corresponding to the payout preset are added based on the symbol combination stopped and displayed on the pay line L and the table in Fig. 10 (S48). Thereafter, procedure returns to the main process program and shifts to the determination process in S4.

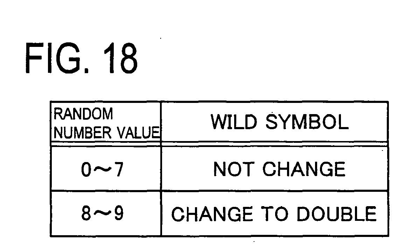

And if it is determined that the WILD symbol 63 or 69 is stopped and displayed on the pay line L or any of the winning symbol combinations is won (S43: YES), it is conducted a lottery to determine whether or not the WILD symbol 63 or 69 is changed to the DOUBLE symbol 91 (S44). Concretely, the random number value is sampled within a range of 0 - 9 by the random number sampling circuit 119 and the lottery is conducted based on the sampled random number value and a symbol change lottery table shown in Fig. 18.

Fig. 18 is an explanatory view showing a symbol change lottery table used in the slot machine according to another embodiment. As shown in Fig. 18, it is set based on the random number range whether or not the WILD symbol is changed. If the random number range lies in a range of 0 - 7, the WILD symbol 63 or 69 stopped is processed as the normal WILD symbol without being changed to the other symbol. And if the random number range lies in a range of 8 - 9, the WILD symbol 63 or 69 once stopped and displayed is changed to the DOUBLE symbol 91, as mentioned later.

And in S45, the lottery result in the symbol change lottery process of S44 is judged. If it is determined that the symbol is not changed (S45: NO), credits corresponding to the payout preset are added based on the symbol combination stopped and displayed on the pay line L and the table shown in Fig. 10 (S48). Thereafter, procedure returns to the main process program and shifts to the determination process in S4.

On the other hand, if it is determined that the symbol is changed in the symbol change lottery process (S45: YES), it is determined whether or not a predetermined time (2 seconds in the embodiment) elapses (S46). And it is determined that the predetermined time does not elapse (S46: NO), procedure waits till the predetermined time elapses. On the other hand, if it is determined that the predetermined time elapses (S46: YES), procedure shifts to S47.

In S47, the auxiliary symbol 90 described as "X 2" is newly displayed in any of the symbol transmissive areas 6 - 8 of the lower liquid crystal display 4, in which the WILD symbol 63 or 69 is stopped and displayed (see Figs. 11 and 12). As a result, the WILD symbol 63 or 69 transmitted and displayed through any of the symbol transmissive areas 6 ~ 8 and the auxiliary symbol 90 described as "X 2" displayed in any of the symbol transmissive area 6 ~ 8 are superimposed with each other, thereby the WILD symbol 36 or 69 is changed to the DOUBLE symbol 91.

Thereafter, based on the symbol combination stopped and displayed on the pay line L and the table shown Fig. 10, credits corresponding to the payout preset are added (S48). Thereafter, procedure returns to the main process program and shifts to the determination process in S4.

As mentioned, also in the slot machine of another embodiment, by combining one symbol on the reel displayed through the liquid crystal display and the other symbol newly displayed on the liquid crystal display, it can be realized variegated effect to change one symbol to the other symbol which is finally displayed. Accordingly, on the basis of the effect unpredictable for the player, it is improved expectation of the player as if the player can obtain higher payout, thus the player does not get tired.

And in the slot machine 1 of the embodiment, although the symbols stopped and displayed on the pay line L are determined every each of the reels 25 - 27 in the base game based on the random number values sampled by the random number sampling circuit 119 (see Fig. 9), the lottery of the winning symbol combination may be first conducted based on the random number values sampled by the random number sampling circuit 119 and thereafter the reels 25 - 27 may be controlled so that the symbols corresponding to the winning result are stopped and displayed on the pay line L.

And in the slot machine 1 of the embodiment, although the WILD symbol 69 is changed to the DOUBLE symbol 91 having the characteristic of the WILD symbol which makes the payout twice when a predetermined condition is satisfied, the WILD symbol 69 may be changed to the TRIPLE symbol having the characteristic of the WILD symbol which makes the payout three times. Further, the symbol changed is not limited to the WILD symbol, and for example, the seven symbol or the blank may be changed.

Further, in the slot machine 1 of the embodiment, although the reels 25 - 27 are constructed from the mechanical reels using the reel drums, such reels may be constructed from video reels realized by using the liquid crystal display.

Further, in the slot machine 1 of the embodiment, although the lower liquid crystal display 4, which is constructed from the transparent liquid crystal display, is utilized as the effect display device with the transmissive display portions, such effect display device is not limited to the liquid crystal display. For example, a transparent EL may be utilized as the effect display device.

## Claims

1. A gaming machine comprising:
a first display device having a plurality of display lines on each of which plural symbols are variably displayed;
a stop control device for controlling the first display device so as to stop the symbols on each of the display lines in the first display device;
a payout device for paying out a first payout based on a first winning symbol combination in a case that the symbols stopped and displayed on each of the display lines in the first display device by the stop control device becomes the first winning symbol combination;
a second display device arranged in front of the first display device, the second display device having transmissive areas each of which is arranged so as to correspond to each of the display lines and through which the symbols stopped and displayed on each of the display lines are transmitted and displayed;
a symbol determination device for determining whether or not the first winning symbol combination includes a specific symbol in a case that the symbols stopped and displayed on each of the display lines becomes the first winning symbol combination;
a symbol change device for changing the specific symbol to a final symbol constructing a second winning symbol combination with a second payout in a case that it is determined by the symbol determination device that the specific symbol is included in the first winning symbol combination; and
an auxiliary symbol display device for controlling the second display device to display an auxiliary symbol constructing the final symbol in cooperation with the specific symbol in the transmissive area corresponding to the display line on which the specific symbol is stopped and displayed.

2. The gaming machine according to claim 1, wherein the final symbol is constructed from the specific symbol stopped and displayed on the display line of the first display device and the auxiliary symbol displayed in the transmissive area, both the specific symbol and the auxiliary symbol being superimposed with each other.

3. The gaming machine according to claim 1 or 2, wherein the specific symbol is a wild symbol which is substitutable for any of the symbols.

4. The gaming machine according to claim 3, wherein the auxiliary symbol is a multiplication symbol by which the first payout is multiplied so as to become the second payout.

5. The gaming machine according to claim 1, 2, 3 or 4 further comprising:
a lottery device for conducting a lottery to determine whether or not the specific symbol is changed to the final symbol in a case that it is determined that the specific symbol is included in the first winning symbol combination by the symbol determination device;
wherein the symbol change device changes the specific symbol to the final symbol based on a lottery result by the lottery device.

6. A gaming machine comprising:
a variable display device having a plurality of display lines on each of which plural symbols are variably displayed;
a stop control device for controlling the variable display device so as to stop the symbols on each of the display lines in the variable display device;
a payout device for paying out a first payout based on a first winning symbol combination in a case that the symbols stopped and displayed on each of the display lines in the variable display device by the stop control device becomes the first winning symbol combination;
a symbol determination device for determining whether or not the first winning symbol combination includes a specific symbol in a case that the symbols stopped and displayed on each of the display lines becomes the first winning symbol combination;
a symbol change device for changing the specific symbol to a final symbol constructing a second winning symbol combination with a second payout in a case that it is determined by the symbol determination device that the specific symbol is included in the first winning symbol combination; and
an auxiliary symbol display device for displaying an auxiliary symbol constructing the final symbol in cooperation with the specific symbol stopped and displayed on the display line.
